(19)

**Europäisches Patentamt**
**European Patent Office**
**Office européen des brevets**

(11)  **EP 1 668 245 B1**

(12)  **EUROPÄISCHE PATENTSCHRIFT**

(45) Veröffentlichungstag und Bekanntmachung des
Hinweises auf die Patenterteilung:
**10.11.2010  Patentblatt 2010/45**

(21) Anmeldenummer: **04765639.2**

(22) Anmeldetag: **27.09.2004**

(51) Int Cl.:
*F03D 9/00* (2006.01)    *H02J 3/38* (2006.01)

(86) Internationale Anmeldenummer:
**PCT/EP2004/010816**

(87) Internationale Veröffentlichungsnummer:
**WO 2005/031160 (07.04.2005 Gazette 2005/14)**

(54) **WINDENERGIEANLAGE MIT EINEM BLINDLEISTUNGSMODUL ZUR NETZSTÜTZUNG UND
VERFAHREN DAZU**

WIND POWER PLANT COMPRISING A REACTIVE POWER MODULE FOR SUPPORTING A
POWER SUPPLY SYSTEM AND CORRESPONDING METHOD

EOLIENNE DOTEE D'UN MODULE DE PUISSANCE REACTIVE POUR LE SUPPORT DU RESEAU
ET PROCEDE ASSOCIE

(84) Benannte Vertragsstaaten:
**AT BE BG CH CY CZ DE DK EE ES FI FR GB GR
HU IE IT LI LU MC NL PL PT RO SE SI SK TR**

(30) Priorität: **25.09.2003   DE 10344392**

(43) Veröffentlichungstag der Anmeldung:
**14.06.2006   Patentblatt 2006/24**

(73) Patentinhaber: **REpower Systems AG
22335 Hamburg (DE)**

(72) Erfinder:
• **FORTMANN, Jens
  13156 Berlin (DE)**
• **LETAS, Heinz-Hermann
  23701 Gross Meinsdorf (DE)**

(74) Vertreter: **Glawe, Delfs, Moll
Patent- und Rechtsanwälte
Rothenbaumchaussee 58
20148 Hamburg (DE)**

(56) Entgegenhaltungen:
**DE-A1- 10 019 362    DE-A1- 10 059 018
GB-A- 2 330 256**

## Beschreibung

Die Erfindung betrifft eine Windenergieanlage mit einem Rotor, einem durch ihn angetriebenen Generator, der elektrische Leistung erzeugt und an ein Stromnetz abgibt, und einer Steuereinheit, die den Betrieb der Windenergieanlage steuert und ein Blindleistungsmodul aufweist.

Windenergieanlagen finden immer weitere Verbreitung. Häufig sind sie nicht alleine aufgestellt, sondern zu sogenannten Windparks zusammengefasst. Die durch Windenergieanlagen bereitgestellte Kraftwerkskapazität ist beträchtlich. Man geht daher dazu über, die Windenergieanlagen nicht mehr an Verteilungsnetze im Mittelspannungsbereich anzuschließen, sondern sie zunehmend direkt an das Übertragungsnetz im Hoch- und Höchstspannungsbereich anzuschließen. Das bringt geänderte Anforderungen an das Verhalten der Windenergieanlage bei Spannungseinbrüchen mit sich. Anders als die an Verteilungsnetze angeschlossenen Kraftwerke sollen die an das Übertragungsnetz angeschlossenen Kraftwerke bei einem kurzzeitigen Spannungseinbruch nicht vom Netz getrennt werden. Sie müssen das Netz bei einem Spannungseinbruch, bspw. aufgrund eines Kurzschlusses, stützen und Wirkleistung in das Netz einspeisen. Andernfalls könnte es für das Netz zu einer kritischen Situation kommen, die zu einer Absenkung der Frequenz im Netz und zur Überlastung von Betriebsmitteln und schließlich zum Abschalten von ganzen Kraftwerken führen könnte. Eine Voraussetzung für das Einspeisen von Wirkleistung ist aber, dass im Netz noch ein ausreichendes Spannungsniveau aufrechterhalten wird. Sinkt die Spannung im Netz zu sehr ab, so müsste der Strom gemäß der bekannten Beziehung, wonach die elektrische Leistung proportional zu dem Produkt aus Spannung und Strom ist, im gleichen Maße erhöht werden, damit noch dieselbe Wirkleistung in das Netz eingespeist werden kann. Da der Strom aufgrund der Auslegung der Kraftwerke nicht beliebig gesteigert werden kann, gibt es einen kritischen Grenzwert für die Spannung; unter diesem Wert ist es nicht mehr möglich, die gewünschte Leistung in das Netz einzuspeisen.

Es ist bekannt, durch Einspeisung von kapazitivem Blindstrom das Spannungsniveau am Verknüpfungspunkt zwischen Kraftwerk und Netz anzuheben, sofern sich der die Störung verursachende Kurzschluss in einer gewissen Distanz zu dem Verknüpfungspunkt befindet. Netzbetreiber geben daher den Kraftwerksbetreibern gewisse Vorgaben bezüglich Blindstromeinspeisung im Fall von Spannungsrückgängen. Eine solche Vorgabe kann in Gestalt der in Fig. 6 dargestellten Kennlinie erfolgen. So ist aus der DE-A-100 19 362 ein Verfahren zur Regelung der dem Netz zugeführten Wirkleistung bekannt, bei dem zusätzlich Blindleistung zur Stützung der Netzspannung eingespeist werden kann. Damit dabei der zulässige Gesamtstrom nicht überschritten wird, ist vorgesehen, erforderlichenfalls die abgegebene Wirkleistung zu verringern.

Ferner ist aus der GB-A-2 330 256 ein Verfahren zum Betreiben von Windparks an schwachen Netzen bekannt, bei dem zur Vermeidung eines kritischen Spannungsanstiegs bei schwacher Netzlast vorgesehen ist, die von dem Windpark abgegebene Wirkleistung zu senken. Es ist nicht beschrieben, wie bei absinkender Netzspannung eine Stützung erfolgen soll. Ferner sind Regelungsverfahren bekannt, die eine reine Strombegrenzung vorsehen (DE-A-101 38 399). Zusätzlich können weitere Parameter wie ein Betrag eines einzuspeisenden Stroms oder des Leistungsfaktors vorgegeben werden. Das dient in erster Linie dem Schutz vor Grenzwertüberschreitungen bezüglich des eingespeisten Stroms, das Aufrechterhalten eines bestimmten Spannungs- oder Leistungsniveaus ist nicht beschrieben.

Schließlich ist aus der DE-C-100 59 018 ein Verfahren zur Leistungsregelung von Windenergieanlagen bekannt, das die Einspeisung einer möglichst konstanten Scheinleistung vorsieht. Als Eingabewert ist die Vorgabe einer gewünschten Wirkleistung vorgesehen, woraus der Regler dann eine entsprechende Blindleistung zur Konstanthaltung der Scheinleistung einstellt. Das Bereitstellen einer konstanten Scheinleistung hat den Nachteil, dass in Zeiten mit schwacher Netzlast ein hoher Betrag an Blindleistung eingespeist wird. Das kann zu unerwünschten negativen Einflüssen auf die Höhe der Netzspannung führen.

Der von der Windenergieanlage maximal lieferbare Strom ist durch Betriebsgrenzen der einzelnen Komponenten beschränkt. Das führt zu Schwierigkeiten bei der Auslegung. Wird die Anlage so ausgelegt, dass sie bereits bei einem geringen Spannungsrückgang einen recht hohen Blindstrom in das Netz einspeist, so steht nur noch wenig Wirkstrom und damit wenig Wirkleistung zur Verfügung. Wird hingegen die Anlage so ausgelegt, dass sie bei einem Spannungsrückgang nur wenig Blindstrom in das Netz einspeist, steht zwar ausreichend Wirkstrom zur Verfügung, jedoch wird das Netz nur in geringem Maß gestützt.

Ausgehend von dem zuletzt genannten Stand der Technik liegt der Erfindung die Aufgabe zugrunde, eine Windenergieanlage der eingangs genannten Art derart zu verbessern, dass sie die Nachteile einer Scheinleistungsregelung vermeidet und insbesondere ein besseres Verhalten zur Stützung des Netzes bei Spannungsrückgängen aufweist.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einer Windenergieanlage mit einem Rotor, einem durch ihn angetriebenen Generator, der elektrische Leistung erzeugt und an ein Stromnetz abgibt, und einer Steuereinheit, die den Betrieb der Anlage steuert und ein Blindleistungssteuermodul aufweist, vorgesehen, dass die Steuereinheit eine Bestimmungseinrichtung für eine Sicherheitsmindestwirkleistung aufweist und eine Begrenzungseinreichung vorgesehen ist, die mit der Bestimmungseinrichtung und dem Blindleistungssteuermodul verbunden ist und so zusammenwirkt, das höchstens soviel Blindleistung erzeugt wird, dass noch die Sicherheitsmindestwirkleistung zur Verfügung steht.

Nachfolgend seien einige verwendete Begriffe erläutert:

Unter einem Generator wird eine Maschine verstanden, die mechanische Energie in elektrische Energie umwandelt. Der Begriff ist nicht auf herkömmliche Gleichstrommaschinen beschränkt sondern umfasst auch Generatoren für ein- oder mehrphasigen Wechselstrom. Es kann sich um eine Synchron- oder um eine Asynchronmaschine handeln. In der Regel umfasst der Generator auch einen Wechselrichter, zwingend ist dies jedoch nicht. Der Wechselrichter kann auch als Doppelwechselrichter ausgeführt sein. Der Wechselrichter kann in verschiedenen Topologien ausgeführt sein, wie z. B. Spannungszwischenkreis, Stromzwischenkreis, Direktumrichter.

Unter einem Rotor wird eine Luftschraube verstanden, die ein- oder mehrblättrig ausgeführt ist. Vorzugsweise sind die Blätter in ihrem Anstellwinkel verstellbar.

Unter Sicherheitsmindestwirkleistung wird diejenige Wirkleistung verstanden, die dazu erforderlich ist, dass die Drehzahl der Windenergieanlage in der Weise gehalten wird, dass sie einen zulässigen Arbeitsbereich nicht verlässt und dass die mechanische Belastung des Antriebsstrangs unterhalb gewisser Grenzen gehalten wird.

Die Erfindung beruht auf dem Gedanken, die Windenergieanlage so zu steuern, dass sie im Fall eines Spannungsrückgangs einen möglichst großen Beitrag zur Stabilisierung des Netzes leistet, indem sie den für ihren eigenen sichereren Weiterbetrieb erforderlichen Leistungsbedarf ermittelt und die überschüssige Leistung möglichst vollständig zur Stützung des Netzes verwendet. Dazu sieht die Erfindung vor, dass mittels einer Bestimmungseinrichtung die für den sicheren Betrieb mindestens erforderliche Wirkleistung bestimmt wird. Die Regelung ist erfindungsgemäß so ausgelegt, dass zumindest diese Wirkleistung erzeugt wird. Damit wird sichergestellt, dass die Windenergieanlage innerhalb ihrer Betriebsgrenzen bleibt, insbesondere dass die Drehzahl des Rotors nicht den zulässigen Arbeitsbereich verlässt. Denn würde die Sicherheitsmindestwirkleistung nicht mehr erzeugt, so bestünde die Gefahr, dass der dadurch entlastete Rotor seine Drehzahl über den Arbeitsbereich hinaus erhöht, wodurch es zu Schäden an der Windenergieanlage kommen kann. Das Blindleistungssteuermodul ist so ausgelegt, dass die (vektorielle) Differenz zur verfügbaren Scheinleistung zur Stützung als Blindleistung in das Netz abgeben werden kann. Die Erfindung erreicht auf diese Weise, dass zur Stützung des Netzes schnell und viel Blindleistung abgegeben werden kann. Die zur Verfügung stehende Scheinleistung wird dank der Erfindung maximal zur Stützung des Netzes ausgenutzt, ohne aber zu versuchen, die Scheinleistung konstant zu halten, wodurch es bei schwacher Netzlast zu einer hohen Blindleistungseinspeisung mit häufig negativen Folgen für die Qualität der Netzspannung kommen könnte. Bei einer Scheinleistungsregelung, wie aus dem Stand der Technik bekannt ist, kann prinzipbedingt nicht sicher gestellt werden, dass die Wirkleistung einen bestimmten Betrag nicht unterschreitet. Mit einer Scheinleistungsregelung kann daher die Aufrechterhaltung einer Sicherheitsmindestwirkleistung nicht erreicht werden. Das im Stand der Technik bestehende Dilemma, zwischen einer flachen Kennlinie mit geringer Netzstützung oder einer steilen Kennlinie mit der Gefahr, dass nicht mehr ausreichend Wirkleistung für einen sicheren Betrieb der Anlage erzeugt wird, einen Mittelweg zu finden und dabei, um ausreichend Sicherheitsspielraum zu haben, Leistungsfähigkeit zu verschenken, wird durch die Erfindung überwunden. Insbesondere können aktuelle Anlagen-, Standort- und Umgebungsbedingungen individuell zur Erhöhung der Stützwirkung berücksichtigt werden.

Die Bestimmung der Sicherheitsmindestwirkleistung kann auf unterschiedliche Weise erfolgen. Es kann vorgesehen sein, die dafür benötigte Leistung direkt zu bestimmen, oder das erforderliche Drehmoment (Sicherheitsmindestdrehmoment) zu bestimmen. Letzteres ist über die Winkelgeschwindigkeit (Drehzahl) mit der Sicherheitsmindestwirkleistung direkt verknüpft. Vorzugsweise weist die Bestimmungseinrichtung ein Drehzahlreservemodul auf. Dieses Modul ist dazu ausgelegt, die aktuelle Drehzahl des Rotors zu ermitteln und mit den Grenzen des Drehzahl-Betriebsbereichs zu vergleichen. Je kleiner der Abstand ist, desto mehr Wirkleistung muss erzeugt werden, um ein Überschreiten des Betriebsbereichs zu verhindern. Vorzugsweise sind noch weitere Module vorhanden. Um ein gutes dynamisches Verhalten zu erzielen, kann zusätzlich ein Drehbeschleunigungsmodul vorgesehen sein. Dies erfasst die Drehzahländerung und bestimmt auf diese Weise, ob ausgehend von der aktuellen Drehzahl eine baldige Überschreitung des Drehzahl-Betriebsbreichs droht oder nicht. Je nachdem wird die zur Beibehaltung eines stabilen Betriebs notwendige Sicherheitsmindestwirkleistung erhöht oder erniedrigt. So kann in bestimmten Betriebspunkten die erforderliche Sicherheitsbetriebsleistung sogar Null sein. Zur weiteren Verbesserung kann in entsprechender Weise ein Modul für den Blattwinkel des Rotors vorgesehen sein.

Das schnelle Bereitstellen von Blindleistung zur Stützung des Netzes und die damit einhergehende Verringerung der erzeugten Wirkleistung auf die Sicherheitsmindestwirkleistung stellt eine Stoßbelastung dar, die zu einer starken mechanischen Belastung führen kann. Das gilt insbesondere dann, wenn in dem Antriebsstrang zwischen Rotor und Generator ein Getriebe angeordnet ist. Durch eine solche Stoßbelastung können Schwingungen des Antriebsstrangs angeregt werden. Um sie zu dämpfen, ist vorzugsweise ein Stoßschwingungsdämpfungsmodul vorgesehen. Es ist dazu ausgebildet, in elektrische und ggf. auch mechanische Parameter der Windenergieanlage so einzugreifen, dass die durch die Stoßbelastung angeregten Eigenfrequenzen des Antriebsstrangs und der Blätter des Rotors gedämpft werden.

Um eine ausreichend schnelle Reaktion zu ermöglichen, ist die Zeitkonstante des Stoßschwingungsdämpfungsmoduls mit Vorteil deutlich kleiner als die eines eventuell vorhandenen Normalbetriebsschwingungsdämpfers, und zwar vorzugsweise beträgt sie weniger als 1/8. Dadurch können sprunghafte Änderungen besser ausgeregelt werden, als dies bei der auf die Dämpfung periodischer Vorgänge ausgelegten Schwingungsdämpfung für den Normalbetrieb der Fall ist. Um die Netzstützung nicht unnötig zu beeinträchtigen ist das Stoßschwingungsdämpfungsmodul zweckmäßigerweise so ausgebildet, dass es nur einen begrenzten Teil der zur Verfügung stehenden Wirkleistung für die Dämpfung von Schwingungen verwendet.

Vorzugsweise ist ein mit den vorgenannten Modulen zusammenwirkendes Überschreitungsmodul vorgesehen, das eine zeitabhängige Überschreitung vorgegebener Grenzwerte erlaubt. Das Überschreitungsmodul weist dazu insbesondere einen dynamischen und einen statischen Grenzwert auf. Es ist so ausgelegt, dass für eine bestimmte Zeit der dynamische Grenzwert und danach der (niedrigere) statische Grenzwert nicht überschritten werden darf. Das Überschreitungsmodul erzeugt also zeitabhängige Grenzwerte. Dies ermöglicht es, kurzzeitig zur Verbesserung des Betriebsverhaltens der Windenergieanlage die Grenzwerte zu überschreiten. Dies ist von besonderem Vorteil im bezug auf das Stoßschwingungsdämpfungsmodul, da dieses dann unter kurzfristiger Ausnutzung der höheren dynamischen Grenzwerte schnell die durch die Stoßbelastungen auftretenden Schwingungen dämpfen kann.

Bei einer bevorzugten Ausführungsform ist das Blindleistungssteuermodul als Zustandsregler ausgeführt. Das hat den Vorteil, dass ein Mehrgrößensystem, und das ist typischerweise bei einer Windenergieanlage der Fall, besser geregelt werden kann. Das ist vor allem bei der steigenden Komplexität der Anlagen ein erheblicher Vorteil. Ein Zustandsregler hat weiter den Vorzug, dass nicht-lineare und zeitvariante Systeme bzw. Systembestandteile besser berücksichtigt werden können. Dementsprechend weist vorzugsweise auch die Bestimmungseinrichtung einen Zustandsbeobachter auf. Damit kann die Genauigkeit bei der Ermittlung der Sicherheitsmindestwirkleistung insbesondere dann verbessert werden, wenn die Windenergieanlage in ihrem System Nichtlinearitäten und Zeitvarianten aufweist.

Die Erfindung bezieht sich weiter auf ein entsprechendes Verfahren zum Steuern des Betriebs einer Windenergieanlage an einem Stromnetz mit einem Generator, wobei in Abhängigkeit von einem Spannungsrückgang im Stromnetz Blindleistung in das Stromnetz eingespeist wird, wobei gemäß der Erfindung eine zum sicheren Weiterbetrieb erforderliche Sicherheitsmindestwirkleistung ermittelt wird und die erzeugte Blindleistung auf einen solchen vorzugsweise größtmöglichen Wert begrenzt wird, dass noch die Sicherheitsmindestwirkleistung erzeugt wird. Das erfindungsgemäße Verfahren sorgt dafür, dass die zur Stützung eingespeiste Blindleistung einen möglichst hohen Wert erreicht, bis sie begrenzt wird. Bezüglich weiterer Einzelheiten und vorteilhafter Weiterbildungen gilt obiges sinngemäß.

Die Erfindung ist nachfolgend unter Bezugnahme auf die beigefügte Zeichnung erläutert, in der ein vorteilhaftes Ausführungsbeispiel der Erfindung dargestellt ist. Es zeigen:

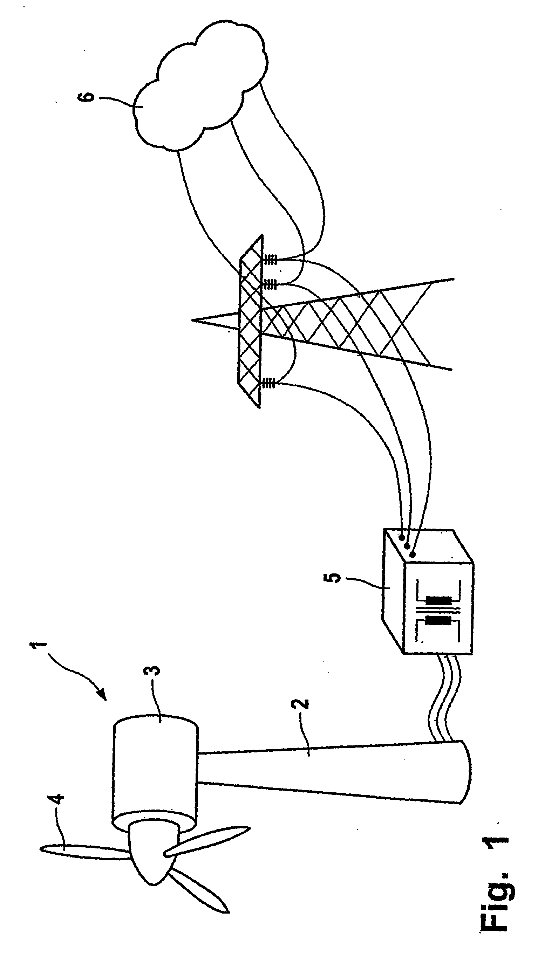

Fig. 1    eine schematische Ansicht einer Windkraftanlage nach der Erfindung, angeschlossen an ein Strom- netz;

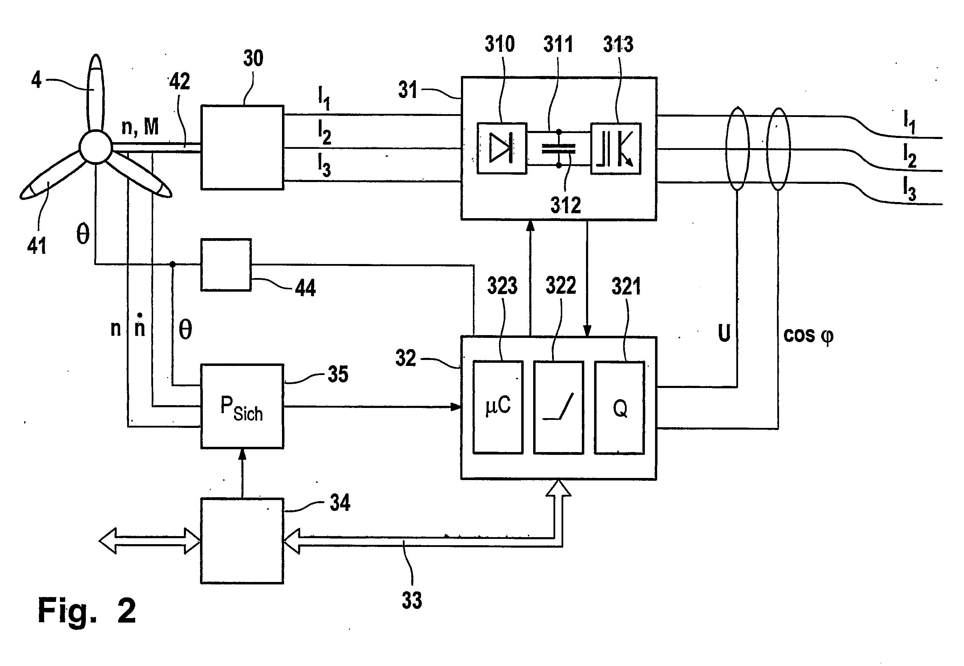

Fig. 2    eine schematische Ansicht einer Steuereinheit der erfindungsgemäßen Windenergieanlage;

Fig. 3    eine schematische Ansicht einer Bestimmungsein- richtung;

Fig. 4    einen Wirkungsplan der erfindungsgemäßen Wind- energieanlage;

Fig. 5    eine Variante des Wirkungsplans gemäß Fig. 4; und

Fig. 6    eine Kennlinie bezüglich Blindstromeinspeisung über Spannung.

Eine in ihrer Gesamtheit mit der Bezugsziffer 1 bezeichnete erfindungsgemäße Windenergieanlage umfasst einen Mast 2 mit einem an seinem oberen Ende angeordneten Maschinengehäuse 3, mit einem Rotor 4. Die Windenergieanlage 1 ist über eine Anschlusseinrichtung 5 mit einem Stromnetz 6 verbunden. Bei dem Stromnetz 6 handelt es sich um ein zur Weitverkehrsübertragung elektrischer Energie dienendes Hoch- oder Höchstspannungsnetz. Die Anschlusseinrichtung 5 weist geeignete Umspannmittel auf, um die von der Windenergieanlage 1 gelieferte elektrische Leistung auf ein zur Einspeisung in das Netz 6 geeignetes Spannungsniveau anzuheben.

Der Rotor 4 ist an der Stirnseite des Maschinengehäuses 3 drehbeweglich gelagert. Der Rotor 4 weist drei an einer Mittelnabe 40 angeordnete Rotorblätter 41 auf. Der Anstellwinkel der Rotorblätter 41 kann über einen Blattwinkelsteller 44 verändert werden. In dem Maschinengehäuse sind, unter anderem als Hauptbaugruppen, eine Asynchronmaschine 30, ein Wechselrichtersatz 31 sowie eine Steuereinheit 32 angeordnet. Diese Anordnung ist lediglich beispielhaft; es versteht sich, dass in alternativen Ausführungsformen auch ein doppelt gespeister Asynchrongenerator, ein Fremd- oder Permanenterreger Synchrongenerator einsetzt sein kann. Der Rotor 4 treibt über eine Antriebswelle 42 direkt oder indirekt über ein Getriebe (nicht dargestellt) die Asynchronmaschine 30. Sie wandelt die von dem Rotor 4 gelieferte mechanische Leistung in elektrische Leistung, die als Drehstrom dem Wechselrichtersatz 31 zugeführt wird.

Der Wechselrichtersatz 31 weist an seiner der Asynchronmaschine 30 zugewandten Eingangsseite einen passiven oder aktiven Wechselrichter 310 auf. Von diesem wird die elektrische Leistung über einen Zwischenkreis 311 mit einem Speicherkondensator 312 als Gleichspannung zu einem Wechselrichter 313 geführt. Dort wird die elektrische Leistung in einen dreiphasigen Drehstrom umgewandelt. Als Bauteile des Wechselrichters werden insbesondere Dioden, Thyristoren, IGBTs, IGSTs oder GTO verwendet. Er kann auch doppelt gespeist ausgeführt sein. Der Betrieb des Wechselrichtersatzes 31 wird gesteuert durch die Steuerungseinheit 32. Über geeignete (nur teilweise dargestellte) Steuerleitungen bestimmt sie die Spannung, den Strom sowie die Aufteilung der abgegebenen Leistung in Wirk- und Blindleistung. Die von dem Wechselrichtersatz 31 als Drehstrom abgegebene elektrische Leistung wird über die Anschlusseinrichtung 5 dem Stromnetz 6 zugeführt. Die Spannung sowie die Phasenlage der abgegebenen elektrischen Leistung werden gemessen und zu der Steuereinrichtung 32 zurückgeführt. Bei den alternativen Generatorarten ist der Umrichter in geeigneter Weise angepasst.

Die Steuereinrichtung 32 umfasst einen Betriebsführungsprozessor 323, ein Blindleistungssteuermodul 321 sowie eine Begrenzungseinrichtung 322. Das Blindleistungssteuermodul 321 dient dazu, die von dem Wechselrichter 31 an das Netz abgegebene Blindleistung zu steuern. Die Begrenzungseinrichtung 322 sorgt dafür, dass der von dem Blindleistungssteuermodul 321 ausgegebene Wert für die Blindleistung bestimmte Grenzen nicht überschreitet. Die Steuereinheit 32 ist optional über einen Datenbus 33 mit einer Datenfernübertragungseinheit 34 verbunden. Sie ist dazu ausgebildet, Vorgaben und Parameteränderungen von einer entfernt liegenden Zentrale zu empfangen und an die Steuereinheit 32 zu übermitteln, und im Gegenzug Informationen über den Betrieb der Windenergieanlage an die entfernt liegende Zentrale zu übermitteln.

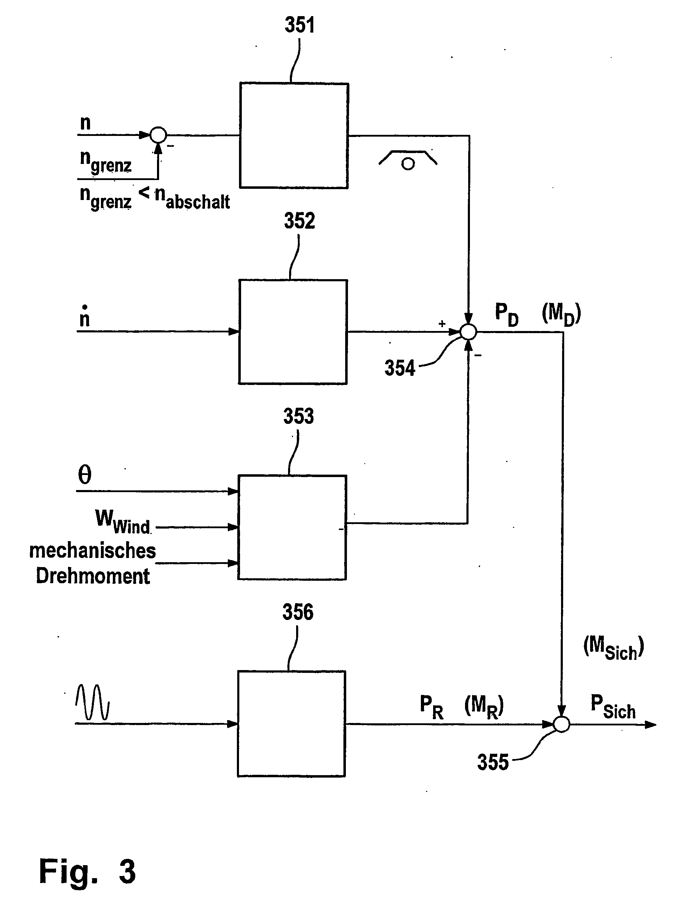

Erfindungsgemäß ist eine Bestimmungseinrichtung 35 für die Sicherheitsmindestwirkleistung vorgesehen. Der Bestimmungseinrichtung für die Sicherheitsmindestwirkleistung werden in einem ersten Ast als Eingangsgrößen die Drehzahl (n), deren Ableitung nach der Zeit sowie der Blattwinkel zugeführt. In Fig. 3 ist der Aufbau der Bestimmungseinrichtung für Sicherheitsmindestwirkleistung näher dargestellt. Die Drehzahl (n) wird gegenüber einem Grenzwert (n grenz) bewertet und über ein erstes Verarbeitungsglied 351 zu einem Summationsglied 354 geführt. Sein Ausgangssignal ist so begrenzt, dass er mindestens Null beträgt. Die Ableitung der Drehzahl nach der Zeit wird über ein zweites Verarbeitungsglied 352 mit umgekehrtem Vorzeichen zu dem Summationsglied 354 geführt. Zudem wird der Blattwinkel und optional die Windgeschwindigkeit und das an der Antriebswelle 42 bzw. dem Getriebe (nicht dargestellt) gemessene Drehmoment über ein drittes Verarbeitungsglied 353 mit umgekehrtem Vorzeichen zum Summationsglied 354 geführt. Die daraus gebildete Summe ist ein Maß für die zur Beibehaltung eines stabilen Betriebs mindestens erforderliche Wirkleistung. Sie wird als ein erster Summand auf ein zweites Summationsglied 355 gegeben. In einem zweiten Ast wird die zur Dämpfung von Stoßschwingungen erforderliche Wirkleistung bestimmt. Dies geschieht mittels eines vierten Verarbeitungsgliedes 356. Die somit ermittelte Wirkleistung zur Schwingungsdämpfung wird als zweiter Summand auf das zweite Summationsglied 355 gegeben. Es sei darauf hingewiesen, dass der die Stoßschwingungsdämpfung betreffende zweite Ast nicht unbedingt erforderlich ist. Durch Aufsummieren erhält man am Ausgang des zweiten Summationsglieds 355 die Sicherheitsmindestwirkleistung. Die Sicherheitsmindestwirkleistung wird als Ausgangssignal der Bestimmungseinrichtung 35 an die Steuereinheit 32 übermittelt. Entsprechend der Umformung $P = M* \omega$ kann die Darstellung statt mit Wirkleistung auch mit Drehmomenten erfolgen.

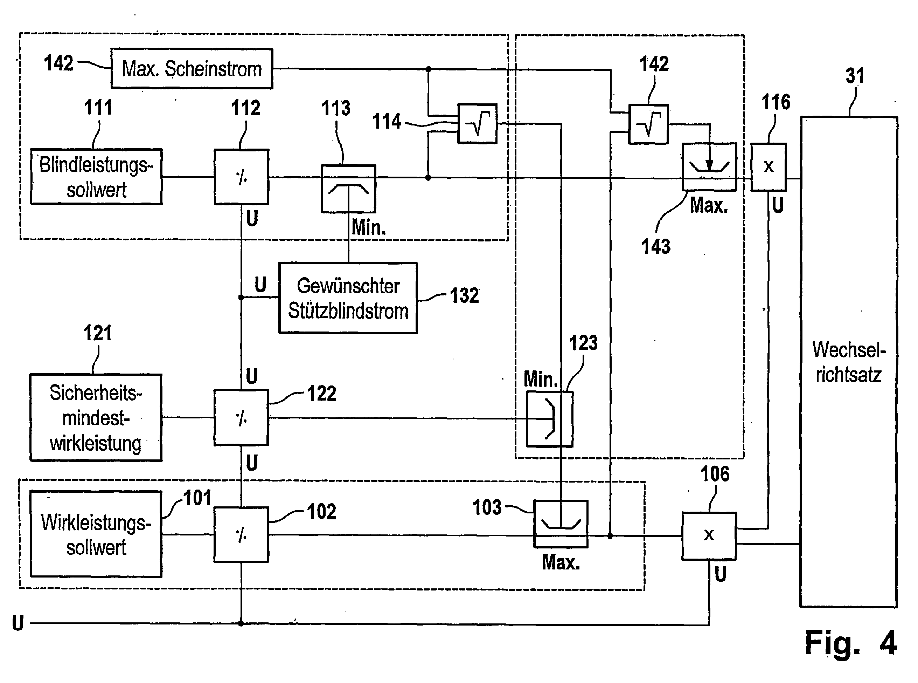

Die Funktionsweise im Fall einer Netzstörung mit Rückgang der Netzspannung wird nachfolgend unter Bezugnahme auf Fig. 4 beschrieben. Von einer nicht dargestellten Betriebsführungseinheit der Windenergieanlage wird ein Wirkleistungssollwert (Schritt 101) und ein Blindleistungssollwert (111) vorgegeben. Aus diesem lässt sich durch Division mit der Netzspannung, genauer gesagt mit dem Faktor $\sqrt{3}$ der verketteten Spannung bei einem Drehstromnetz, der Sollwert für den Wirkstrom (Schritt 102) sowie für den Blindstrom (Schritt 112) berechnen. Mittels der Bestimmungseinrichtung (35) wird die zu dem gegenwärtigen Betriebspunkt sich ergebende Sicherheitsmindestwirkleistung ermittelt (Schritt 121). Aus ihr wird ebenfalls durch Division durch die Netzspannung der erforderliche Sicherheitsmindestwirkstrom berechnet (Schritt 122).

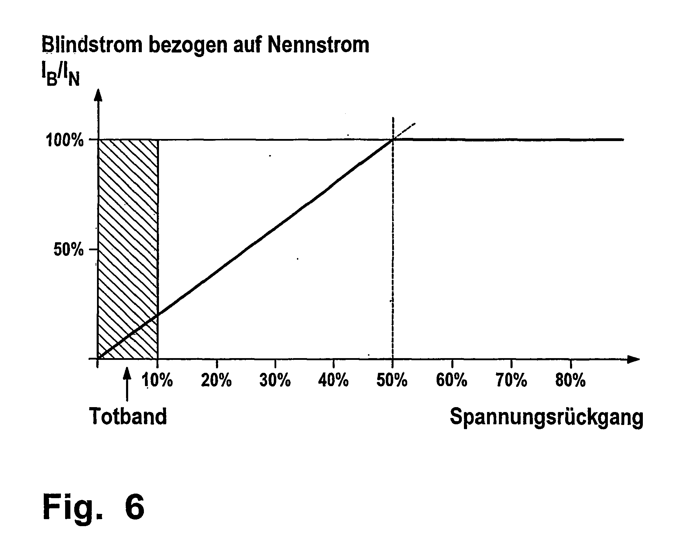

Tritt nun eine Netzstörung auf, die zu einer Absenkung der Netzspannung führt, so muss von der Windenergieanlage 1 zur Stützung des Netzes 6 Blindstrom eingespeist werden. Die Höhe des einzuspeisenden Blindstroms bemisst sich nach Vorgaben des Netzbetreibers. Ein Beispiel dafür ist in Fig. 6 gegeben. Es handelt sich um einen einfachen Zusammenhang zwischen dem Spannungsrückgang im Netz und dem einzuspeisenden Blindstrom. Es versteht sich, dass dieser Zusammenhang auch komplexer sein kann, z. B. in Form einer im Kraftwerksbereich an sich bekannten Spannungsregelung, bei der die Spannung im Netz mit Hilfe des Blindstroms geregelt werden soll, der dass von dem Netzbetreiber über entsprechende Datenfernübertragungsmittel der von der Windenergieanlage 1 zu liefernde Blindstrom direkt übermittelt wird. Diese Bestimmung des gewünschten Stützblindstroms erfolgt in Schritt 132. Dieser Stützblindstrom stellt die untere Grenze für den Blindstrom dar; sollte der in Schritt 112 berechnete Sollwert niedriger liegen, so wird er über diese Begrenzung auf den Mindestwert angehoben (Schritt 113). Es ist auch möglich, mittels einer ähnlichen Kennlinie (nicht dargestellt) Vorgaben für einen zusätzlich gewünschten Stützblindstrom zu machen. Aus dem somit korrigierten Blindstromsollwert wird basierend auf dem maximalen Scheinstrom (142) ein höchst zulässiger Wirkstrom berechnet (Schritt 114). Dieser höchst zulässige Wirkstrom wird nach unten hin durch den in Schritt 122 ermittelten Sicherheitsmindestwirkstrom (Schritt 123) begrenzt. Der sich daraus ergebende Wirkstrom, der mindestens so groß wie der Sicherheitsmindestwirkstrom ist, stellt eine obere Grenze für den in Schritt 102 berechneten Wirkstromsollwert dar (Schritt 103). Aus diesem sogenannten begrenzten Wirkstromsollwert wird durch Multiplikation mit der Netzspannung (Schritt 106) der begrenzte Wirkleistungssollwert berechnet; dementsprechend wird aus dem korrigierten Blindstromsollwert ebenfalls durch Multiplikation mit der Netzspannung ein begrenzter Blindleistungssollwert berechnet (Schritt 116). Dieser Wert wird dem Wechselrichtersatz 31 zugeführt. Damit ist ein sicherer Betrieb der Windenergieanlage 1 gewährleistet.

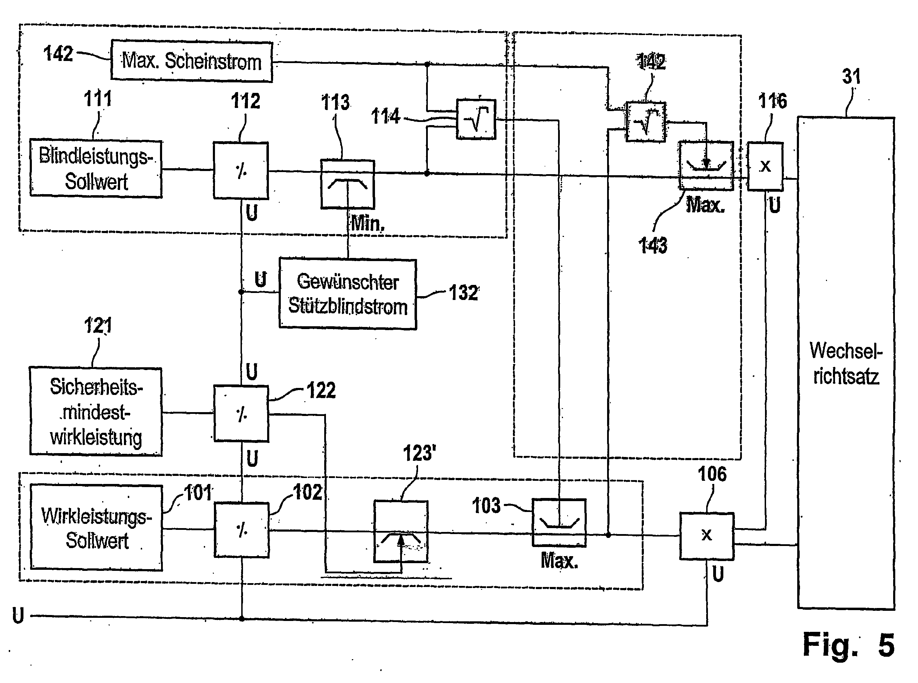

In Fig. 5 ist eine Variante dargestellt, bei der die Begrenzung auf mindestens den Sicherheitsmindestwert in Schritt 123' erfolgt.

Basierend auf diesem begrenzten Wirkstromsollwert wird wiederum unter Berücksichtigung des maximalen Scheinstroms (Schritt 142) in einem Berechnungsschritt 142 ein höchstzulässiger Blindstrom berechnet. Dieser stellt die Obergrenze für den Blindstrom dar, den die Windenergieanlage (1) zur Stützung in das Netz einspeisen kann. Daraus wird durch Multiplikation mit der Netzspannung der begrenzte Blindleistungssollwert berechnet (Schritt 116). Dieser Wert wird ebenfalls dem Wechselrichtersatz 31 zugeführt.

Beispielsweise lässt sich für eine Windenergieanlage mit doppelt gespeister Asynchronmaschine (DASM) der verfügbare Betrag der Blindleistung in Abhängigkeit von der Generatordrehzahl in guter Nährung beschreiben als

$$|Q| = |Q_{Stator}| + |Q_{Rotor}| = \sqrt{(S_{Stator})^2 - (P_{Stator})^2} + \sqrt{(S_{Rotor})^2 - (sP_{Stator})^2}$$

mit

$$s = \frac{n_{sync} - n}{n_{sync}}$$

| | |
|---|---|
| $S_{Stator}$ | Verfügbare Scheinleistung Statorzweig |
| $S_{Rotor}$ | Verfügbare Scheinleistung Rotorzweig (d. h. insbesondere netzseitiger Umrichter) |
| $P_{Stator}$ | Wirkleistungsbeitrag durch den Statorzweig |
| $Q_{Stator}$ | Blindleistungsbeitrag durch den Statorzweig |
| $Q_{Rotor}$ | Blindleistungsbeitrag durch den Rotorzweig |
| $s$ | Schlupf |
| $n_{sync}$ | Synchrondrehzahl |
| $n$ | Generatordrehzahl. |

Der Wechselrichtersatz 31 stellt anhand dieser begrenzten Wirkleistungssollwerte und begrenzten Blindleistungssollwerte den Wechselrichter 313 so ein, dass die entsprechenden Wirk- und Blindleistungen über die Anschlusseinrichtung 5 an das Netz 6 abgegeben werden. Weist der Wechselrichtersatz anstelle des eingangsseitigen Vollweggleichrichters 310 einen zweiten Wechselrichter auf, so werden die entsprechenden Sollgrößen vorzugsweise ihm zugeführt. Der Zwischenkreis mit dem Ladungsspeicher 312 stehen dann zusätzlich als Energiespeicher zur Abpufferung zur Verfügung. Weist die Windenergieanlage gar keinen Wechselrichtersatz 31 auf, sondern wird die erforderliche Wirk- und Blindleistung direkt über entsprechende Einstellung des Generators 30 bewirkt, so werden die entsprechenden Sollgrößen direkt an dem Generator 30 geführt.

**Patentansprüche**

1. Windenergieanlage mit einem Rotor (4), einem durch ihn angetriebenen Generator (3), der elektrische Leistung erzeugt und an ein Stromnetz (6) abgibt, und einer Steuereinheit (32), die den Betrieb der windenergieanlage steuert und ein Blindleistungssteuermodul (321) aufweist,
**dadurch gekennzeichnet, dass**
die Steuereinheit (32) eine Bestimmungseinrichtung (35) für eine Sicherheitsmindestwirkleistung aufweist, wobei die Sicherheitsmindestwirkleistung die für den Betrieb der Windenergieanlage in ihren Betriebsgrenzen erforderliche Wirkleistung ist, und eine Begrenzungseinrichtung (323) vorgesehen ist, die mit der Bestimmungseinrichtung (35) und dem Blindleistungssteuermodul (321) verbunden ist und so zusammenwirkt, dass höchstens soviel Blindleistung erzeugt wird, dass noch die Sicherheitsmindestwirkleistung zur Verfügung steht.

2. Windenergieanlage nach Anspruch 1,
**dadurch gekennzeichnet, dass**
die Bestimmungseinrichtung (35) ein Drehzahlreservemodul (351) aufweist.

3. Windenergieanlage nach Anspruch 2,
**dadurch gekennzeichnet, dass**
die Bestimmungseinrichtung (35) ein Drehbeschleunigungsmodul (352) und/oder ein Blattwinkelmodul (353) aufweist.

4. Windenergieanlage nach einem der Ansprüche 2 oder 3,
**dadurch gekennzeichnet, dass**
die Bestimmungseinrichtung (35) ein Stoßschwingungsdämpfungsmodul (356) aufweist.

5. Windenergieanlage nach Anspruch 4,
**dadurch gekennzeichnet, dass**
die Zeitkonstante des Stoßschwingungsdämpfungsmoduls (356) weniger als 1/8 eines schwingungsdämpfers für den Normalbetrieb beträgt.

6. Windenergieanlage nach einem der vorhergehenden Ansprüche,
**dadurch gekennzeichnet, dass**
ein Grenzwertüberschreitungsmodul für mindestens eines der Module vorgesehen ist.

7. Windenergieanlage nach Anspruch 6,
**dadurch gekennzeichnet, dass**
das Grenzwertüberschreitungsmodul einen dynamischen und einen statischen Grenzwert umfasst.

8. Windenergieanlage nach einem der vorhergehenden Ansprüche,
**dadurch gekennzeichnet, dass**
das Blindleistungssteuermodul (321) als Zustandsregler ausgeführt ist.

9. Windenergieanlage nach einem der vorhergehenden Ansprüche,
**dadurch gekennzeichnet, dass**
die Bestimmungseinrichtung (35) einen Zustandsbeobachter aufweist.

10. Verfahren zum Steuern des Betriebs einer Windenergieanlage an einem Stromnetz mit einem Generator, wobei in Abhängigkeit von einem Spannungsrückgang im Stromnetz Blindleistung bzw. Blindstrom in das Stromnetz eingespeist wird,
**gekennzeichnet durch**
Ermitteln einer zum sicheren Weiterbetrieb erforderlichen Sicherheitsmindestwirkleistung und
Begrenzen der Blindleistung auf einen solchen Wert, dass zumindest noch die Sicherheitsmindestwirkleistung erzeugt wird.

**Claims**

1. Wind turbine with a rotor (4), a generator (3) driven by it, which generates electrical power and delivers it to a power system (6), and a control unit (32) which controls the operation of the wind turbine and has a reactive-power control module (321), **characterized in that** the control unit (32) has a determining device (35) for a safe minimum active power, with the safe minimum active power being the active power required for operating the wind turbine in its operating limits, and with a limiting device (323) being provided which is connected to the determining device (35) and to the reactive-power control module (321) and interacts in such a manner that, at the most, as much reactive power is generated that the safe minimum active power is still available.

2. Wind turbine according to Claim 1, **characterized in that** the determining device (35) has a speed reserve module (351).

3. Wind turbine according to Claim 2, **characterized in that** the determining device (35) has a rotational acceleration module (352) and/or a blade pitch module (353).

4. Wind turbine according to one of Claims 2 or 3, **characterized in that** the determining device (35) has a shock vibration damping module (356).

5. Wind turbine according to Claim 4, **characterized in that** the time constant of the shock vibration damping module (356) is less than 1/8 of a vibration damper for the normal operation.

6. Wind turbine according to one of the preceding claims, **characterized in that** a limit-value transgression module is provided for at least one of the modules.

7. Wind turbine according to Claim 6, **characterized in that** the limit-value transgression module comprises a dynamic limit value and a static limit value.

8. Wind turbine according to one of the preceding claims, **characterized in that** the reactive-power control module (321) is constructed as state controller.

9. Wind turbine according to one of the preceding claims, **characterized in that** the determining device (35) has a state observer.

10. Method for controlling the operation of a wind turbine on a power system with a generator, wherein reactive power or reactive current, respectively, is fed into the power system in dependence on a voltage drop in the power system, **characterized by** determining of a safe minimum active power required for safe continued operation and limiting the reactive power to such a value that at least the safe minimum active power is still generated.

**Revendications**

1. Éolienne, comportant un rotor (4), un générateur (3), qui est actionné par celui-ci et qui fournit une puissance électrique et la transfère à un réseau électrique (6), et une unité de commande (32), qui commande le fonctionnement de l'éolienne et comporte un module de commande de la puissance réactive (321), **caractérisée en ce que** l'unité de commande (32) comporte un dispositif de détermination (35) destiné à déterminer une puissance active minimum de sécurité, ladite puissance active minimum de sécurité étant la puissance active nécessaire pour le fonctionnement de l'éolienne dans ses limites de fonctionnement, et il est prévu un dispositif de limitation (323) qui est relié au dispositif de détermination (35) et au module de commande de la puissance réactive (321) et coopère de telle sorte que la quantité de puissance réactive générée au maximum est telle que la puissance active minimum de sécurité reste encore disponible.

2. Éolienne selon la revendication 1, **caractérisée en ce que** le dispositif de détermination (35) comporte un module de réserve de vitesse de rotation (351).

3. Éolienne selon la revendication 2, **caractérisée en ce que** le dispositif de détermination (35) comporte un module pour l'accélération de la rotation (352) et/ou un module pour l'angle de pale (353).

4. Éolienne selon la revendication 2 ou 3, **caractérisée en ce que** le dispositif de détermination (35) comporte un module pour l'amortissement des oscillations dues aux chocs (356).

5. Éolienne selon la revendication 4, **caractérisée en ce que** la constante de temps du module pour l'amortissement des oscillations dues aux chocs (356) est égale à moins de 1/8 d'un amortisseur d'oscillations pour le fonctionnement normal.

**6.** Éolienne selon l'une quelconque des revendications précédentes, **caractérisée en ce qu'**il est prévu un module de franchissement de valeurs limites pour au moins l'un des modules.

**7.** Éolienne selon la revendication 6, **caractérisée en ce que** le module de franchissement de valeurs limites comporte une valeur limite dynamique et une valeur limite statique.

**8.** Éolienne selon l'une quelconque des revendications précédentes, **caractérisée en ce que** le module de commande de la puissance réactive (321) est réalisé sous la forme d'un régulateur d'état.

**9.** Éolienne selon l'une quelconque des revendications précédentes, **caractérisée en ce que** le dispositif de détermination (35) comporte un observateur d'état.

**10.** Procédé pour commander le fonctionnement d'une éolienne sur un réseau électrique avec un générateur, sachant qu'une puissance réactive ou un courant réactif est injecté dans le réseau électrique en fonction d'une diminution de la tension dans le réseau électrique, **caractérisé par** la détermination d'une puissance active minimum de sécurité nécessaire pour un fonctionnement sûr, et la limitation de la puissance réactive à une valeur telle qu'au moins la puissance active minimum de sécurité est encore générée.

**Fig. 1**

EP 1 668 245 B1

**Fig. 2**

Fig. 3

EP 1 668 245 B1

12

EP 1 668 245 B1

**Fig. 4**

Fig. 5

EP 1 668 245 B1

**Blindstrom bezogen auf Nennstrom**

$I_B/I_N$

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10019362 A
- GB 2330256 A
- DE 10138399 A
- DE 10059018 C